# EUROPÄISCHE PATENTSCHRIFT

(11) **EP 3 221 168 B1**
(45) Veröffentlichungstag und Bekanntmachung des Hinweises auf die Patenterteilung: **02.12.2020**
(21) Anmeldenummer: 15784583.5
(22) Anmeldetag: 06.10.2015
(51) Int. Cl.: B60J 7/02, B62D 25/06, B62D 27/02, B62D 29/00, B29C 70/68, B29C 44/12, B29L 31/30, B29K 75/00

(54) **RAHMEN EINES FAHRZEUGDACHS UND DESSEN HERSTELLUNG**
VEHICLE ROOF FRAME AND PRODUCTION THEREOF
CADRE D'UN TOIT DE VÉHICULE ET SA FABRICATION

(30) Priorität: 21.11.2014 DE 102014117049
(43) Veröffentlichungstag der Anmeldung: 27.09.2017
(73) Patentinhaber: Webasto SE, 82131 Stockdorf (DE)
(72) Erfinder: HOELZEL, Dominik, 82131 Stockdorf (DE)
(74) Vertreter: advotec.
(86) Internationale Anmeldenummer: PCT/EP2015/073020
(87) Internationale Veröffentlichungsnummer: WO 2016/078821

(56) Entgegenhaltungen:
- EP-A1- 1 302 352
- EP-A2- 1 088 746
- EP-A2- 1 914 097
- DE-A1- 19 641 462
- DE-A1- 19 821 694
- DE-A1-102011 013 818

## Beschreibung

Die Erfindung betrifft ein Fahrzeugdach mit den Merkmalen des Oberbegriffs des Patentanspruchs 1 sowie ein Verfahren zur Herstellung eines Rahmens eines Fahrzeugdachs.

Ein derartiger Rahmen ist aus der Praxis bekannt (z.B. aus DE 198 21 694 A1 oder DE 196 41 462 A1) und stellt beispielsweise einen Rahmen einer Schiebedachanordnung dar, die ein Deckelelement aufweist, mittels dessen eine Dachöffnung eines Fahrzeugdachs wahlweise geschlossen oder zumindest teilweise freigegeben werden kann. Der Rahmen, der in das Fahrzeugdach einsetzbar ist, nimmt Bauteile der Schiebedachanordnung auf, die zum Verstellen des Deckelelements erforderlich sind. Bei diesen Bauteilen handelt es sich insbesondere um einen Antriebsmotor, Führungsschienen und sonstige Kinematikbauteile. Zudem kann auf den Rahmen auch ein bezüglich des Fahrzeugaufbaus ortsfestes, insbesondere transparentes Dachpaneel aufgeklebt sein, das die Dachöffnung heckseitig begrenzt.

Bisher bekannte Rahmen der vorstehend beschriebenen Art sind häufig aus Stahlblech hergestellt und umfassen einen Hauptrahmen, der große Ausschnitte begrenzt. Der Hauptrahmen ist einstückig als so genanntes Stanz-/Biegeteil ausgeführt, so dass bei der Herstellung etwa die Hälfte des eingesetzten Materials als Abfall entsorgt oder auch in einen Materialkreislauf zurückgeführt werden muss. Anbauteile und Blenden, die den Rahmen im Bereich von Sichtflächen optisch aufwerten, sind in der Regel nach einem Klebeverfahren mit dem Rahmen verbunden. Des Weiteren ist es erforderlich, zur Vermeidung von Korrosion eine so genannte KTL(kathodische Tauchlackierung)-Dickschicht auf das Stahlblech aufzubringen. Dies erhöht ebenfalls die Herstellungskosten.

Der Erfindung liegt die Aufgabe zugrunde, einen Rahmen der einleitend genannten Gattung zu schaffen, dessen Herstellung in ökonomischer Weise möglich ist.

Diese Aufgabe ist erfindungsgemäß durch das Fahrzeugdach mit den Merkmalen des Patentanspruchs 1 gelöst.

Der Kern der Erfindung besteht mithin darin, dass einzelne Blechteile eines Fahrzeugdachrahmens durch eine Polyurethanumschäumung miteinander verfügt werden, die die Bindenähte bildet. Es ist möglich, die einzelnen Blechteile des Rahmens mit einem geringen Materialverbrauch nach einem Stanz-/Biegeprozess zu fertigen, um sie anschließend in erfindungsgemäßer Weise durch die Polyurethanumschäumung miteinander zu verbinden. Im weitesten Sinne sind die Blechteile bei dem Schäumprozess zur Herstellung der Bindenähte als Einlegeteile zu betrachten.

Auf Seiten eines Rahmenherstellers kann so ein modulares Baukastensystem vorgehalten werden, wobei die Längsholme und der bzw. die Querholme für verschiedene Rahmen einsetzbar sind und in Abhängigkeit vom Fahrzeugtyp ausgewählt und verfügt werden können.

Der Rahmen nach der Erfindung ist insbesondere ein Rahmen eines Dachöffnungssystems mit einem verstellbaren Deckelelement zum wahlweisen Öffnen oder Verschließen einer Dachöffnung, die von dem Rahmen zumindest teilweise umschlossen ist. Denkbar ist es auch, dass der Rahmen nur zur Lagerung und Fixierung von starren und insbesondere transparenten Dachpaneelen dient.

Bei einer aus wenigen Bauteilen bestehenden speziellen Ausführungsform umfasst der Rahmen nach der Erfindung zwei sich in Dachlängsrichtung erstreckende Längsholme und einen Querholm, der die beiden Längsholme insbesondere an ihren vorderen Enden miteinander verbindet und damit ein Rahmenvorderteil bildet. Jedoch wird der Rahmen nach der Erfindung in der Praxis zumeist mindestens zwei Querholme aufweisen, von denen einer das Rahmenvorderteil und der andere ein Rahmenhinterteil bildet. Zudem kann ein weiterer Querholm vorgesehen sein, der die beiden Längsholme in einem mittleren Abschnitt nach Art einer Mittelstrebe miteinander verbindet und zwei gegebenenfalls transparente Dachausschnitte voneinander trennt.

Zwischen den Längsholmen und dem mindestens einen Querholm können Stoßstellen ausgebildet sein, die einen geraden oder auch einen kurvenförmigen Verlauf haben. Die Stoßstellen sind von dem die Bindenähte bildenden Polyurethanschaum umschlossen. Durch den kurvenförmigen oder auch schlangenförmigen Verlauf der Stoßstellen erhöht sich die Stabilität des Rahmens.

Denkbar ist es aber auch, dass sich der Querholm und die beiden Längsholme im Bereich der aus dem Polyurethanschaum gebildeten Bindenähte überlappen, was ebenfalls die Steifigkeit bzw. die Stabilität des Rahmens erhöhen kann.

Der Rahmen nach der Erfindung kann bei einer speziellen Ausführungsform einen Funktionsabschnitt aufweisen, der aus einem Polyurethanschaum gebildet ist und an mindestens einen der Längsholme und/oder dem mindestens einen Querholm angebunden ist.

Unter einem Funktionsabschnitt ist im Sinne der Erfindung ein aus einem Polyurethanschaum gefertigter Rahmenabschnitt zu verstehen, der zur Befestigung bzw. Halterung und Fixierung oder auch zur Lagerung von funktionswesentlichen Bauelementen des Fahrzeugdaches dient. Auch kann der Funktionsabschnitt nur kaschierende Eigenschaften haben.

Beispielsweise umfasst der Funktionsabschnitt einen Halteabschnitt für eine Dichtung eines Dachöffnungssystems. Der Halteabschnitt kann eine Dichtungsnut umfassen, in die die Dichtung eingesteckt ist. Durch die Ausführung des Halteabschnitts aus einem Polyurethanschaum kann eine stabile Fixierung der Dichtung ohne zusätzliches Klebeverfahren gewährleistet werden, wie es beim Fixieren einer Dichtung an einem Blechteil erforderlich wäre. Der Funktionsabschnitt kann auch zur Fixierung eines Verstärkungsbleches an mindestens einem der Längsholme und/oder an dem mindestens einen Querholm dienen. Beispielsweise übergreifen Verstärkungsbleche die Fügestellen zwischen den Längsholmen und dem mindestens einen Querholm. Auch können Haltebleche mittels des Funktionsabschnitts fixiert werden, die im Sinne eines Doms oder dergleichen zur Fixierung von weiteren Anbauteilen wie Führungsschienen oder auch zur Fixierung des Rahmens selbst an dem Fahrzeugaufbau erforderlich sind. Durch den mindestens einen Funktionsabschnitt des Rahmens nach der Erfindung ist also eine Funktionsintegration bei der Herstellung des Rahmens möglich. Es sind hierzu keine nachfolgenden, separaten Arbeitsschritte erforderlich.

Bei einer weiteren speziellen Ausführungsform des Rahmens nach der Erfindung umfasst der Funktionsabschnitt eine Blende, die an mindestens einem der Längsholme und/oder an dem mindestens einen Querholm ausgebildet ist. Die Blende kann damit aus dem Polyurethanschaum gebildet oder auch als separates Bauteil über einen den Funktionsabschnitt bildenden Polyurethanschaum an den Rahmen angebunden sein und so das Erscheinungsbild des Rahmens nach der Erfindung verbessern.

Der Rahmen nach der Erfindung kann zudem mindestens eine Sichtfläche aufweisen, die von einem an den Querholm und/oder an mindestens einem der Längsholme angebundenen Polyurethanschaum gebildet ist. Die Sichtfläche kann eine glatte Oberfläche oder auch eine Narbung aufweisen, die in dem Polyurethanschaum ausgebildet ist.

Durch die Ausbildung von Sichtflächen aus Polyurethanschaum mit oder ohne Narbung können wertige Oberflächen erzeugt werden, was die optische Anmutung eines Rahmens erhöht.

Bei dem Rahmen nach der Erfindung können auch Kanten der aus einem Blechteil gefertigten Querholme und/oder des aus einem Blechteil gebildeten Querholms mit einer Randumschäumung versehen sein, so dass insbesondere in diesem Bereich das Risiko einer Kantenkorrosion reduziert ist. Gegebenenfalls kann damit auf eine Oberflächenbeschichtung der Blechteile, insbesondere eine KTL-Beschichtung verzichtet werden oder eine gegenüber dem Stand der Technik dünnere KTL-Beschichtung vorgesehen sein, was zu einer Reduzierung der Herstellungskosten führt.

Die Erfindung hat auch ein Fahrzeugdach zum Gegenstand, umfassend einen Rahmen, der bezogen auf eine vertikale Dachlängsmittelebene beidseits jeweils einen aus einem Blechteil gebildeten Längsholm und mindestens einen die beiden Längsholme miteinander verbindenden Querholm umfasst, wobei er mindestens einen Funktionsabschnitt aufweist, der aus einem Polyurethanschaum gebildet ist und an mindestens einem der Längsholme und/oder dem Querholm angebunden ist. Der Funktionsabschnitt ist beispielsweise gemäß den vorstehend beschriebenen Funktionsabschnitten ausgebildet.

Zudem hat die Erfindung ein Fahrzeugdach zum Gegenstand, umfassend einen Rahmen, der ebenfalls bezogen auf eine vertikale Dachlängsmittelebene beidseits jeweils einen aus einem Blechteil gebildeten Längsholm und mindestens einen die beiden Längsholme miteinander verbindenden, aus einem Blechteil gebildeten Querholm umfasst, wobei er mindestens eine Sichtfläche aufweist, die von einem an mindestens einen der Längsholme und/oder den Querholm angebundenen Polyurethanschaum gebildet ist.

Bei einer speziellen Ausführungsform des Rahmens nach der Erfindung tragen die beiden Längsholme ein insbesondere transparentes Dachpaneel, wobei das Dachpaneel jeweils über einen Polyurethanschaum-Formabschnitt an den beiden Längsholmen fixiert ist.

Des Weiteren hat die Erfindung ein Verfahren zur Herstellung eines Rahmens eines Fahrzeugdachs zum Gegenstand, der bezogen auf eine vertikale Verdecklängsmittelebene beidseits jeweils einen aus einem Blechteil gebildeten Längsholm und mindestens einen die beiden Längsholme miteinander verbindenden, aus einem Blechteil gebildeten Querholm aufweist. Die Längsholme und der Querholm werden bei diesem Verfahren nach einem Schäumprozess unter Ausbildung von Bindenähten durch Polyurethanschaum miteinander verbunden.

Das Verfahren nach der Erfindung kann unter Einsatz eines Schäumwerkzeugs hergestellt werden, in das die Längsholme und der Querholm eingelegt werden und in dem die Bindenähte aus dem Polyurethanschaum ausgebildet werden.

Bei dem Schäumprozess, der gegebenenfalls auch mehrstufig in mehreren Schäumwerkzeugen ausgeführt werden kann, kann auch ein im obigen Sinne ausgeführter Funktionsabschnitt und/oder eine im obigen Sinne ausgeführte Sichtfläche ausgebildet werden, der bzw. die an mindestens einen der Längsholme und/oder an den Querholm angebunden wird.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Fahrzeugdachs nach der Erfindung ist in der Zeichnung schematisch vereinfacht dargestellt und wird in der nachfolgenden Beschreibung näher erläutert. Es zeigt:

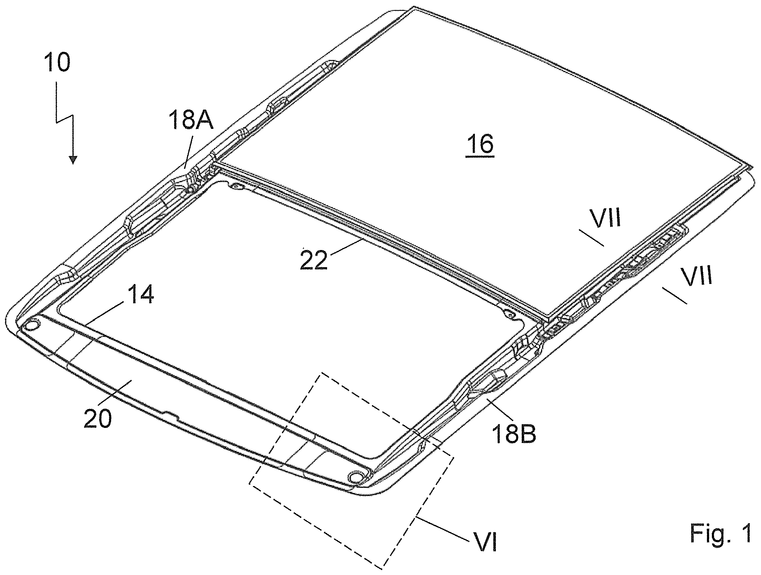

- Figur 1: eine perspektivische Draufsicht eines Schiebedachrahmens mit einem daran fixierten Glaspaneel;
- Figur 2: eine perspektivische Draufsicht des Schiebedachrahmens ohne Glaspaneel;
- Figur 3: eine perspektivische Unteransicht des Schiebedachrahmens mit Glaspaneel;
- Figur 4: einen Schnitt durch den Schiebedachrahmen nach Figur 2 entlang der Linie IV-IV in Figur 2, jedoch zusammen mit einem Schiebedachdeckelelement;
- Figur 5: einen Schnitt durch den Schiebedachrahmen entlang der Linie V-V in Figur 2, jedoch zusammen mit einem verstellbaren Schiebedachdeckelelement;
- Figur 6: eine vergrößerte Ansicht des Bereichs VI-VI in Figur 1;
- Figur 7: einen Schnitt durch den Schiebedachrahmen entlang der Linie VII-VII in Figur 1;

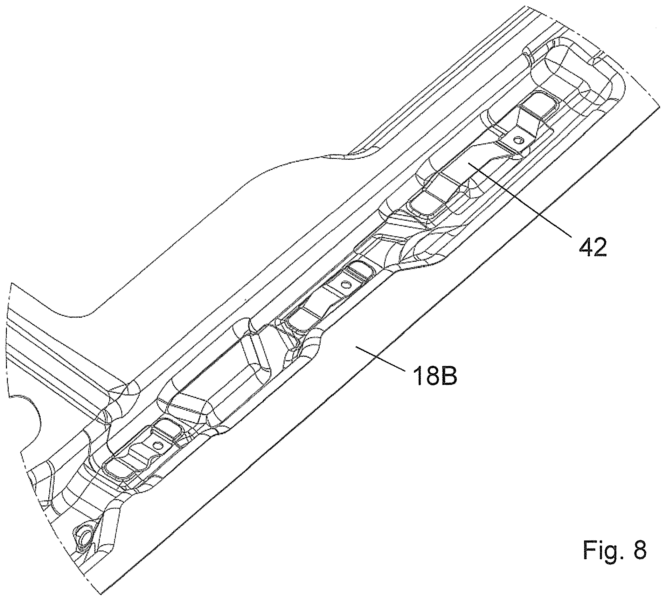

- Figur 8: eine vergrößerte Ansicht des Bereichs VIII-VIII in Figur 2; und

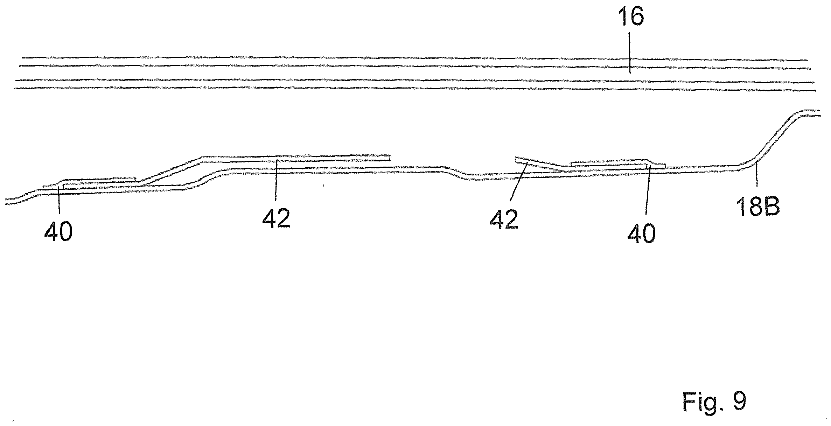

- Figur 9: einen Schnitt durch den Schiebedachrahmen entlang der Linie IX-IX in Figur 2.

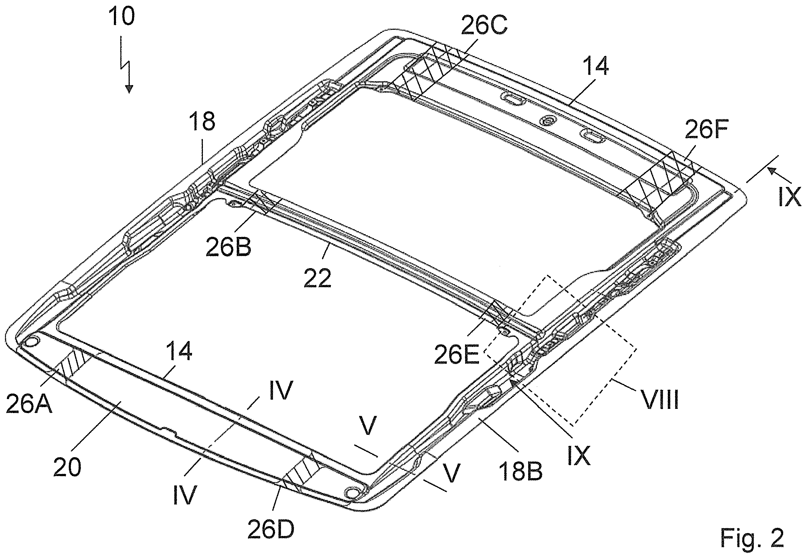

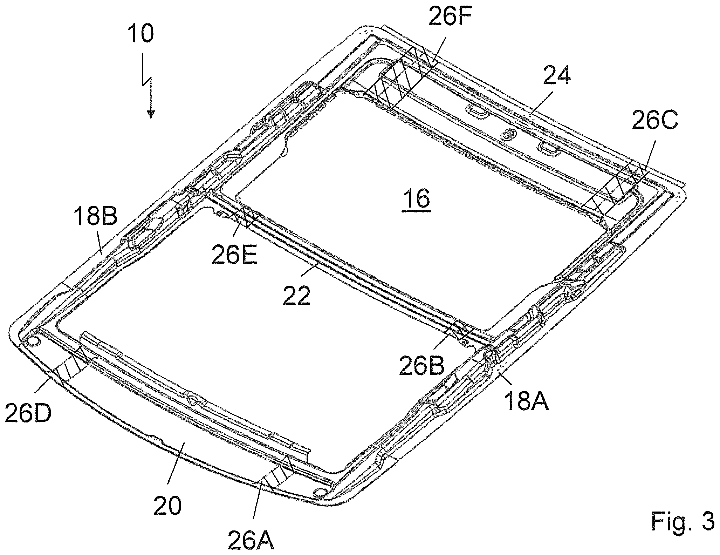

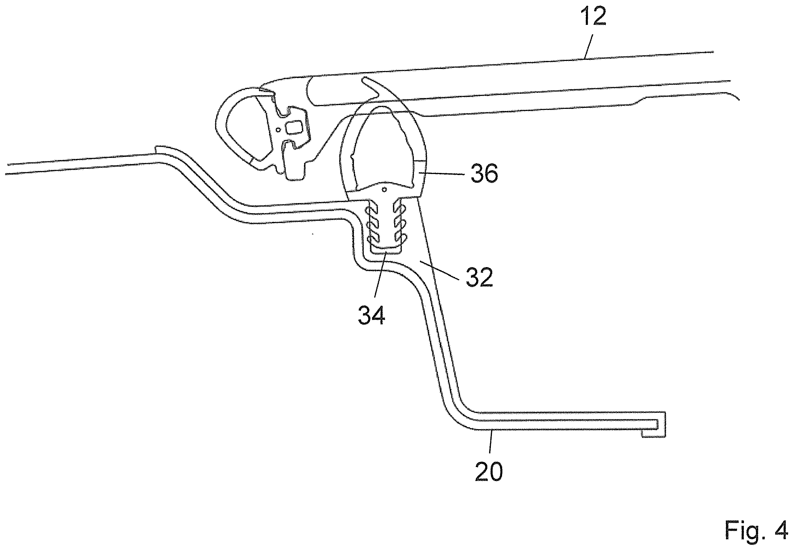

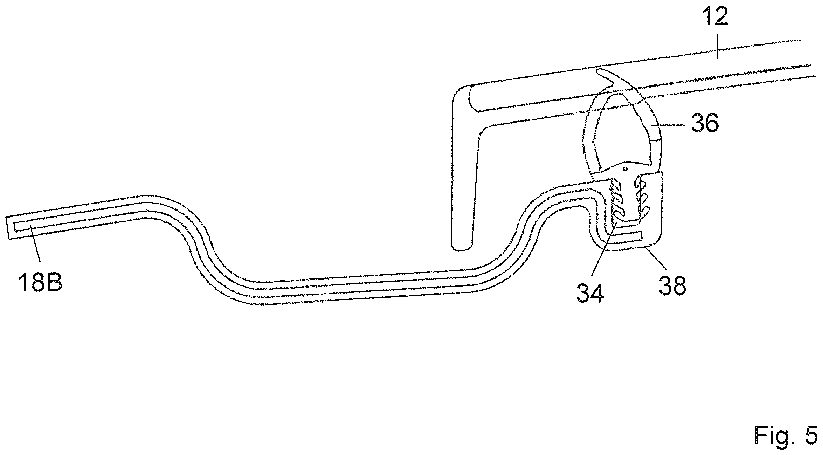

In der Zeichnung ist ein Rahmen 10 eines Fahrzeugdaches dargestellt, der in einem betreffenden Personenkraftwagen verbaubar ist und einem hier nicht näher dargestellten Dachöffnungssystem zugeordnet ist. Das Dachöffnungssystem umfasst ein in den Figuren 4 und 5 dargestelltes Deckelelement 12, mittels dessen eine Dachöffnung 14, die von dem Rahmen 10 definiert ist, wahlweise geschlossen oder zumindest teilweise geöffnet werden kann. Beim Verstellen ist das Deckelelement 12 mit seinem heckseitigen Rand nach oben ausstellbar und in Fahrzeugheckrichtung über einen von einem Glaspaneel 16 gebildeten Festdachabschnitt verfahrbar. Wie insbesondere den Figuren 2 bis 4 zu entnehmen ist, umfasst der Rahmen zwei Längsholme 18A und 18B, die bezogen auf eine vertikale Dachlängsmittelebene beidseits angeordnet sind und sich jeweils in Fahrzeug- bzw. Dachlängsrichtung erstrecken. Die Längsholme 18A und 18B sind über drei Querholme 20, 22 und 24 miteinander verbunden, die sich jeweils in Dachquerrichtung erstrecken. Der Querholm 20 bildet ein Rahmenvorderteil, der Querholm 24 bildet ein Rahmenhinterteil und der Querholm 22 bildet eine Mittelstrebe des Rahmens 10.

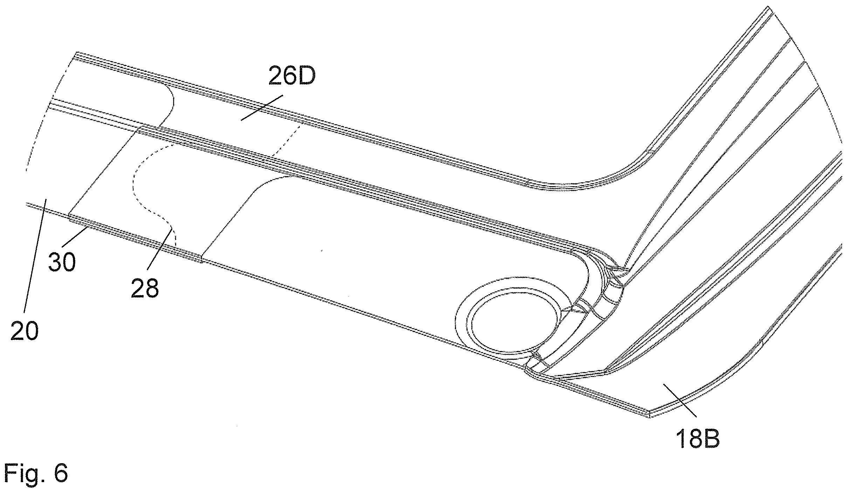

Die beiden Längsholme 18A und 18B und die Querholme 20, 22 und 24 sind jeweils aus einem Stanz-/Biegeblechteil gebildet, das in einem entsprechenden Werkzeug gefertigt wurde. Diese fünf Blechteile sind über sechs Fügebereiche 26A, 26B, 26C, 26D, 26E und 26F miteinander verbunden. Wie Figur 6 zu entnehmen ist, liegen die Längsholme 18A und 18B in den Fügebereichen 26A bzw. 26D jeweils über eine einer Kurvenbahn folgenden Stoßlinie 28 aneinander an, wohingegen die Stoßlinie in den Fügebereichen 26B, 26C, 26E und 26F einen geraden Verlauf hat. Die Fügebereiche 26A bis 26F sind jeweils aus einer eine Bindenaht bildenden Polyurethanschaumschicht 30 gebildet, die die jeweilige Stoßlinie sowohl von der Rahmenoberseite als auch der Rahmenunterseite übergreift. Die jeweilige Polyurethanschicht bzw. -beschichtung 30 bildet also in den Fügebereichen 26A bis 26F eine Ummantelung des Rahmens 10. Zudem übergreifen die Polyurethanschichten 30 die in den Fügebereichen 26A bis 26F vorliegenden Stanzkanten der Längsholme 18A und 18B und der Querholme 20, 22 und 24, so dass das Risiko einer Kantenkorrosion minimiert ist.

Wie insbesondere Figur 4 zu entnehmen ist, ist im Bereich des Querholms 20, der das Rahmenvorderteil bildet, eine aus Polyurethanschaum gebildete Sichtblende 32 angeschäumt, die eine genarbte Sichtfläche aufweist. Die Sichtblende 32 stellt einen Funktionsabschnitt dar, der zudem als Halteabschnitt dient und eine Dichtungsnut 34 aufweist, in welche eine Deckeldichtung 36 mit ihrem im Querschnitt tannenbaumartigen Dichtungsfuß eingesteckt ist. Die Deckeldichtung 36 dichtet in der Schließstellung des Deckelelements 12 einen Fahrzeuginnenraum gegenüber der Fahrzeugumgebung ab. Wie Figur 4 ebenfalls zu entnehmen ist, übergreift der die Sichtblende 32 bildende Funktionsabschnitt den aus einem Blechteil gebildeten Querholm 20 an seinem bezogen auf die Dachöffnung 14 innen liegenden Rand. Dies minimiert wiederum das Risiko einer Kantenkorrosion.

Wie Figur 5 zu entnehmen ist, ist auch im Bereich der Längsholme 18A und 18B des Rahmens 10 jeweils ein Funktionsabschnitt ausgebildet, der aus einem Polyurethanschaum gefertigt ist, der hier den betreffenden, aus einem Blechteil gefertigten Längsholm 18A bzw. 18B beidseits umgreift. Bezogen auf die Dachöffnung 14 ist an dem einen Halteabschnitt 38 bildenden Funktionsabschnitt am innen liegenden Rand eine Dichtungsnut 34 ausgebildet, die eine Fortsetzung der an dem Querholm 20 ausgebildeten Dichtungsnut 34 darstellt und die ebenfalls die Deckeldichtung 36 aufnimmt, die umlaufend um die Dachöffnung 14 an dem Rahmen 10 fixiert ist.

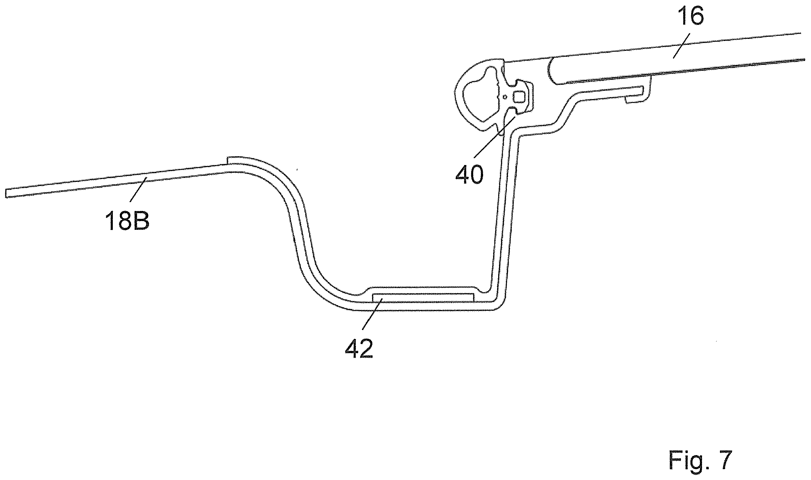

Das den Festdachabschnitt bildende Glaspaneel 16, das heckseitig von der Dachöffnung 14 angeordnet ist, ist bezogen auf die Dachlängsmittelebene beidseits jeweils über einen Formabschnitt 40, der ebenfalls aus Polyurethanschaum gebildet ist, fixiert (Figur 7). Der Polyurethanschaum, der also einen Halteabschnitt für das Glaspaneel 16 bildet, erstreckt sich in eine in dem jeweiligen Längsholm 18A bzw. 18B ausgebildete Rinne und fixiert dort Haltebleche 42, über die eine jeweilige nicht näher dargestellte Führungsschiene für das Deckelelement 12 an dem Rahmen 10 fixiert werden kann. Die Polyurethan- bzw. Kunststoffumschäumung des Rahmens 10 bildet also auch hier einen Funktionsabschnitt, der die Haltebleche 42 fixiert.

Die Herstellung des in der Zeichnung dargestellten Rahmens 10 erfolgt in nachfolgend beschriebener Weise.

Zunächst werden in ein entsprechendes Schäumwerkzeug die Längsholme 18A und 18B und die Querholme 20, 22 und 24 so eingelegt, dass sie über ihre jeweiligen Stoßlinien in der in Figur 2 bzw. Figur 7 dargestellten Weise aneinander grenzen. Zudem werden das Glaspaneel 16 und die Haltebleche 42 in das Schäumwerkzeug eingelegt. Anschließend wird das Schäumwerkzeug zur Ausbildung von Kavitäten geschlossen. Dann wird der aus Polyurethan bestehende Schaumwerkstoff in die Kavitäten eingebracht, so dass sich die oben beschriebenen Polyurethanschichten zum Verfügen der Längsholme 18A und 18B und der Querholme 20, 22 und 24 und die Umschäumungen zur Ausbildung der Halteabschnitte 32, 38 und der Formabschnitte 40 ausbilden. Nach dem Ausreagieren und Aushärten des Polyurethanwerkstoffes wird das Werkzeug geöffnet und der Rahmen 10, an dem das Deckelelement 12 und die Haltebleche 42 fixiert sind, entformt. Anschließend kann die Deckeldichtung 36 in die umlaufende Dichtungsnut 34 eingesetzt werden.

### Bezugszeichenliste

- 10: Rahmen
- 12: Deckelelement
- 14: Dachöffnung
- 16: Glaspaneel
- 18A, B: Längsholm
- 20: Querholm
- 22: Querholm
- 24: Querholm
- 26A, B, C, D, E, F: Fügebereiche
- 28: Stoßlinie
- 30: Polyurethanschicht
- 32: Sichtblende
- 34: Dichtungsnut
- 3 6: Deckeldichtung
- 38: Halteabschnitt
- 40: Formabschnitt
- 42: Halteblech

## Patentansprüche

1. Fahrzeugdach mit einem Rahmen, der eine Dachöffnung, die mittels eines Deckelelements wahlweise geschlossen oder zumindest teilweise freigegeben werden kann, zumindest teilweise umschließt und/oder zur Lagerung und Fixierung eines starren, einen Festdachabschnitt bildenden Dachpanels dient, umfassend bezogen auf eine vertikale Dachlängsmittelebene beidseits jeweils einen Längsholm (18A, 18B) und mindestens einen die beiden Längsholme (18A, 18B) miteinander verbindenden Querholm (20, 22, 24), **dadurch gekennzeichnet, dass** die Längsholme (18A, 18B) und der mindestens eine Querholm (20, 22, 24) jeweils einen aus einem Blechteil gefertigt sind und über Bindenähte aus einem Polyurethanschaum miteinander verbunden sind, die von einer Polyurethanumschäumung gebildet sind, wobei zwischen den Längsholmen (18A, 18B) und dem Querholm (20, 22, 24) Stoßstellen ausgebildet sind, die einen geraden oder kurvigen Verlauf haben und von dem die jeweilige Bindenaht bildenden Polyurethanschaum umschlossen sind, oder sich der Querholm (20, 22, 24) und die beiden Längsholme (18A, 18B) im Bereich der aus dem Polyurethanschaum gebildeten Bindenähte überlappen.

2. Fahrzeugdach nach Anspruch 1, **dadurch gekennzeichnet, dass** der Rahmen mindestens einen Funktionsabschnitt aufweist, der aus einem Polyurethanschaum gebildet ist und an mindestens einen der Längsholme (18A, 18B) und/oder dem mindestens einen Querholm (20, 22, 24) angebunden ist.

3. Fahrzeugdach nach Anspruch 2, **dadurch gekennzeichnet, dass** der Funktionsabschnitt einen Halteabschnitt (38) für eine Dichtung eines Dachöffnungssystems umfasst.

4. Fahrzeugdach nach Anspruch 3, **dadurch gekennzeichnet, dass** der Halteabschnitt (38) eine Dichtungsnut (34) umfasst, in die die Dichtung eingesteckt ist.

5. Fahrzeugdach nach einem der Ansprüche 2 bis 4, **dadurch gekennzeichnet, dass** der Funktionsabschnitt ein Verstärkungsblech an mindestens einem der Längsholme (18A, 18B) und/oder dem Querholm (20, 22, 24) fixiert.

6. Fahrzeugdach nach einem der Ansprüche 2 bis 5, **dadurch gekennzeichnet, dass** der Funktionsabschnitt eine Blende an mindestens einem der Längsholme (18A, 18B) und/oder dem Querholm (20, 22, 24) bildet oder der Funktionsabschnitt eine Blende umfasst, die an mindestens einem der Längsholme (18A, 18B) und/oder an mindestens einem Querholm (20, 22, 24) ausgebildet ist.

7. Fahrzeugdach nach einem der Ansprüche 1 bis 6, **dadurch gekennzeichnet, dass** der Rahmen mindestens eine Sichtfläche aufweist, die von einem an mindestens einem der Längsholme (18A, 18B) und/oder dem Querholm (20, 22, 24) angebundenen Polyurethanschaum gebildet ist.

8. Fahrzeugdach nach einem der Ansprüche 1 bis 7, **gekennzeichnet durch** ein Scheibenelement, das jeweils über einen Formabschnitt (40) aus einem Polyurethanschaum an den beiden Längsholmen (18A, 18B) fixiert ist.

9. Verfahren zur Herstellung eines Rahmens eines Fahrzeugdachs, der eine Dachöffnung, die mittels eines Deckelelements wahlweise geschlossen oder zumindest teilweise freigegeben werden kann, zumindest teilweise umschließt und/oder zur Lagerung und Fixierung eines starren, einen Festdachabschnitt bildenden Dachpanels dient und der bezogen auf eine vertikale Verdecklängsmittelebene beidseits jeweils einen aus einem Blechteil gebildeten Längsholm (18A, 18B) und mindestens einen die beiden Längsholme (18A, 18B) miteinander verbindenden, aus einem Blechteil gebildeten Querholm (20, 22, 24) aufweist, **dadurch gekennzeichnet, dass** die Längsholme (18A, 18B) und der Querholm (20, 22, 24) nach einem Schäumprozess unter Ausbildung von Bindenähten durch einen Polyurethanschaum miteinander verbunden werden, die von einer Polyurethanumschäumung gebildet sind, wobei zwischen den Längsholmen (18A, 18B) und dem Querholm (20, 22, 24) Stoßstellen ausgebildet werden, die einen geraden oder kurvigen Verlauf haben und von dem die jeweilige Bindenaht bildenden Polyurethanschaum umschlossen werden, oder sich der Querholm (20, 22, 24) und die beiden Längsholme (18A, 18B) im Bereich der aus dem Polyurethanschaum gebildeten Bindenähte überlappen.

10. Verfahren nach Anspruch 9, **dadurch gekennzeichnet, dass** die Längsholme (18A, 18B) und der Querholm (20, 22, 24) in ein Schäumwerkzeug eingelegt werden, in dem die Bindenähte ausgebildet werden.

11. Verfahren nach Anspruch 9 oder 10, **dadurch gekennzeichnet, dass** bei dem Schäumprozess ein Funktionsabschnitt ausgebildet wird, der an mindestens einen der Längsholme (18A, 18B) und/oder an den Querholm (20, 22, 24) angebunden wird.

## Claims

1. A vehicular roof having a frame which at least partially encloses a roof opening, which is either closed or at least partially released by means of a lid element, and/or serves for storing and fixating a rigid roof panel forming a hard-top section, the frame having a longitudinal beam (18A, 18B) on either of its two sides relative to a vertical longitudinal center plane of the roof and at least one transverse beam (20, 22, 24) which connects the two longitudinal beams (18A, 18B) to each other, **characterized in that** the longitudinal beams (18A, 18B) and the at least one transverse beam (20, 22, 24) are each made of a sheet metal and are connected to each other via joint lines made of polyurethane foam, the joint lines being formed by polyurethane foaming, joints being formed between the longitudinal beams (18A, 18B) and the transverse beam (20, 22, 24), the joints being straight or curved and being enclosed by the polyurethane foam forming the corresponding joint line, or **in that** the transverse beam (20, 22, 24) and the two longitudinal beams (18A, 18B) overlap in the area of the joint lines formed by polyurethane foam.

2. The vehicular roof according to claim 1, **characterized in that** the frame comprises at least one functional section, which is made of a polyurethane foam and is connected to at least one of the longitudinal beams (18A, 18B) and/or the at least one transverse beam (20, 22, 24).

3. The vehicular roof according to claim 2, **characterized in that** the functional section comprises a holding section (38) for a seal of a roof opening system.

4. The vehicular roof according to claim 3, **characterized in that** the holding section (38) comprises a seal groove (34), into which the seal is inserted.

5. The vehicular roof according to any one of the claims 2 to 4, **characterized in that** the functional section secures a reinforcing sheet to at least one of the longitudinal beams (18A, 18B) and/or the transverse beam (20, 22, 24).

6. The vehicular roof according to any one of the claims 2 to 5, **characterized in that** the functional section forms a panel on at least one of the longitudinal beams (18A, 18B) and/or the transverse beam (20, 22, 24), or the functional section comprises a panel, which is formed on at least one of the longitudinal beams (18A, 18B) and/or on the at least one transverse beam (20, 22, 24).

7. The vehicular roof according to any one of the claims 1 to 6, **characterized in that** the frame comprises at least one visible surface, which is made of a polyurethane foam connected to at least one of the longitudinal beams (18A, 18B) and/or the transverse beam (20, 22, 24).

8. The vehicular roof according to any one of the claims 1 to 7, **characterized by** a window element, which is secured to the two longitudinal beams (18A, 18B) via a molding section (40) made of a polyurethane foam.

9. A method for producing a frame of a vehicular roof, the frame at least partially enclosing a roof opening, which is either closed or at least partially released by means of a lid element, and/or serving for storing and fixating a rigid roof panel forming a hard-top section, the frame having a longitudinal beam (18A, 18B) made of sheet metal on either of its two sides relative to a vertical longitudinal center plane of the roof and at least one transverse beam (20, 22, 24), which connects the two longitudinal beams (18A, 18B) to each other and is made of sheet metal **characterized in that** the longitudinal beams (18A, 18B) and the transverse beam (20, 22, 24) are connected to each other via a polyurethane foam according to a foam molding process and under formation of joint lines, which are formed by polyurethane foaming, joints being formed between the longitudinal beams (18A, 18B) and the transverse beam (20, 22, 24), the joints being straight or curved and being enclosed by the polyurethane foam forming the corresponding joint line, or **in that** the transverse beam (20, 22, 24) and the two longitudinal beams (18A, 18B) overlap in the area of the joint lines formed by polyurethane foam.

10. The method according to claim 9, **characterized in that** the longitudinal beams (18A, 18B) and the transverse beam (20, 22, 24) are inserted into a foaming mold, in which the joint lines are formed.

11. The method according to claim 9 or 10, **characterized in that** a functional section is realized during the foam molding process, the functional section being connected to at least one of the longitudinal beams (18A, 18B) and/or to the transverse beam (20, 22, 24).

## Revendications

1. Toit de véhicule ayant un châssis qui entoure une ouverture de toit au moins en partie, qui est fermée ou déclenchée au moins partiellement au moyen d'un élément de couvercle, et/ou sert à stocker et à fixer un panneau de toit rigid formant une section de toit rigide, le châssis ayant une barre longitudinale (18A, 18B) sur tous ses deux côtés par rapport à un plan longitudinal médian vertical de la toit et au moins une barre transversale (20, 22, 24), qui relie les deux barres longitudinales (18A, 18B), **caractérisé en ce que** les barres longitudinales (18A, 18B) et la au moins une barre transversale (20, 22, 24) sont chacune fabriquées dans une tôle et sont reliées par des joints de connexion en mousse de polyuréthane qui sont constitués d'un moussage de polyuréthane, des joints étant formés entre les barres longitudinales (18A, 18B) et la barre transversale (20, 22, 24), les joints étant droits ou courbés et étant entourés par la mousse de polyuréthane formant le joint de connexion correspondant, ou **en ce que** la barre transversale (20, 22, 24) et les deux barres longitudinales (18A, 18B) se chevauchent dans la region des joints de connexion formant la mousse de polyuréthane.

2. Toit de véhicule selon la revendication 1, **caractérisé en ce que** le châssis comprend au moins une section fonctionnelle, qui est consitutée de la mousse de polyuréthane et est reliée à au moins une des barres longitudinales (18A, 18B) et/ou la au moins une barre transversale (20, 22, 24).

3. Toit de véhicule selon la revendication 2, **caractérisé en ce que** la section fonctionnelle comprend une section de maintien (38) pour une étanchéité d'un système d'ouverture de toit.

4. Toit de véhicule selon la revendication 3, **caractérisé en ce que** la section de maintien (38) comprend une rainure d'étanchéité (34) dans laquelle l'étanchéite est inserrée.

5. Toit de véhicule selon l'une quelconque des revendications 2 à 4, **caractérisé en ce que** la section fonctionnelle fixe une tôle de renforcement à au moins une des barres longitudinales (18A, 18B) et/ou à la au moins une barre transversale (20, 22, 24).

6. Toit de véhicule selon l'une quelconque des revendications 2 à 5, **caractérisé en ce que** la section fonctionnelle forme un panneau sur au moins une des barres longitudinales (18A, 18B) et/ou sur la barre transversale (20, 22, 24) ou la section fonctionnelle comprend un panneau qui est formé sur au moins une des barres longitudinales (18A, 18B) et/ou sur la au moins une barre transversale (20, 22, 24).

7. Toit de véhicule selon l'une quelconque des revendications 1 à 6, **caractérisé en ce que** le châssis comprend au moins une surface visible qui est constituée dans une mousse de polyuréthane reliée à au moins une des barres longitudinales (18A, 18B) et/ou à la barre transversale (20, 22, 24).

8. Toit de véhicule selon l'une quelconque des revendications 1 à 7, **caractérisé par** un élément de fenêtre qui est fixé aux deux barres longitudinales (18A, 18B) par une section de moulage (40) constituée dans une mousse de polyuréthane.

9. Procédé pour la production d'un châssis d'une toit de véhicule, le châssis entourant une ouverture de toit au moins en partie, qui est fermée ou déclenchée au moins partiellement au moyen d'un élément de couvercle, et/ou servant à stocker et fixer un panneau de toit rigide formant une section section de toit rigide, le châssis ayant une barre longitudinale (18A, 18B) fabriquée d'une tôle sur tous ses deux côtés par rapport à un plan longitudinal médian vertical de la toit et au moins une barre transversale (20, 22, 24), qui relie les deux barres longitudinales (18A, 18B) et est fabriquée dans une tôle, **caractérisé en ce que** les barres longitudinales (18A, 18B) et la barre transversale (20, 22, 24) sont reliées les unes aux autres par une mousse de polyuréthane selon un procédé de moussage et en formant des joints de connexion, qui sont formés par le moussage de polyuréthane, des joints étant formés entre les barres longitudinales (18A, 18B) et la barre transversale (20, 22, 24), les joints étant droits ou courbés et étant entourés par la mousse de polyuréthane formant le joint de connexion correspondant, ou **en ce que** la barre transversale (20, 22, 24) et les deux barres longitudinales (18A, 18B) se chevauchent dans la region des joints de connexion formés par la mousse de polyuréthane.

10. Procédé selon la revendication 9, **caractérisé en ce que** les barres longitudinales (18A, 18B) et la barre transversale (20, 22, 24) sont inserrées dans un outil de moussage dans lequel les joints de connexion sont formés.

11. Procédé selon la revendication 9 ou 10, **caractérisé en ce qu'**une section fonctionnelle est formée pendant le procédé de moussage, la section fonctionnelle étant reliée à au moins une des barres longitudinales (18A, 18B) et/ou la barre transversale (20, 22, 24).
